(19) Europäisches Patentamt

European Patent Office

Office européen des brevets

(11) **EP 3 067 608 A1**

(12) **EUROPEAN PATENT APPLICATION**

(43) Date of publication:
**14.09.2016 Bulletin 2016/37**

(51) Int Cl.:
***F16L 9/00*** *(2006.01)*

(21) Application number: **15158508.0**

(22) Date of filing: **10.03.2015**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA** | • **Borealis AG**<br>**1220 Vienna (AT)**<br><br>(72) Inventors:<br>• **Deveci, Suleyman**<br>**Abu Dhabi (AE)**<br>• **Stenstrom, Anders**<br>**Abu Dhabi (AE)** |
| (71) Applicants:<br>• **Abu Dhabi Polymers Co. Ltd (Borouge) LLC.**<br>**Abu Dhabi (AE)** | (74) Representative: **Maiwald Patentanwalts GmbH**<br>**Elisenhof**<br>**Elisenstrasse 3**<br>**80335 München (DE)** |

(54) **Eccentric polyolefin pipe**

(57) The present invention relates to a polymer pipe having a relative eccentricity of at least 0.03, whereby the relative eccentricity ($e_r$) is defined as follows

$$e_r = \frac{S_{max} - S_{min}}{S_{max} + S_{min}} \qquad (I)$$

wherein

$S_{max}$
is the maximum wall thickness of the pipe; and
$S_{min}$
is the minimum wall thickness of the pipe,

to a process for the preparation of such a pipe and the use of such a pipe for the transport of pressurized fluids.

EP 3 067 608 A1

## Description

The present invention relates to an eccentric polymer pipe, suitable for transporting fluids, particularly for transporting pressurized fluids. The present invention also relates to a process for producing an eccentric polymer pipe.

BACKGROUND OF THE INVENTION

Polymer pipes such as polyolefin pipes are inter alia used to transport fluids. The fluid inside the pipe creates internal pressure which leads to hoop stress on the pipe wall. Therefore the pipe has to be designed to withstand the occurring hoop stress. Moreover, the transported fluid may have varying temperatures, usually within the temperature range from about 0 °C to about 50 °C. Such pressure pipes maybe made of polyolefin plastics such as medium density polyethylene (MDPE; density: 0.930-0.942 $g/cm^3$), high density polyethylene (HDPE; density: 0.945-0.965 $g/cm^3$) and polypropylene (PP; density: 0.890-0.915 $g/cm^3$). By the expression "pressure pipe" herein is meant a pipe which, when used, is subjected to a positive pressure, i.e. the pressure inside the pipe is higher than the pressure outside the pipe.

Polymer pipes are generally manufactured by extrusion, or to a smaller extent, by injection moulding. The properties of such conventional polymer pipes produced by extrusion or injection moulding are sufficient for many purposes, although enhanced properties may be desired, for instance in applications requiring high pressure resistance, i.e. pipes that are subjected to an internal fluid pressure for a long and/or short period of time. When considering that the fluids, such as tap water or natural gas, transported in a pipe often are pressurized and have varying temperatures, usually within a range of 0 °C to 50 °C, it is obvious that the pipes must meet demanding requirements.

Especially resistance to internal pressure (also denoted hydrostatic pressure), i.e. resistance against circumferential load is of importance.

Resistance to internal pressure of a polymer material depends on many morphological properties, such as density, crystallinity, co-monomer type, co-monomer content, molecular weight and molecular weight distribution and modality. Effects of these material properties to resistance to hydrostatic pressure of plastic pipes are well known in the literature and in the industry.

However, the resistance to internal pressure can still be improved. It has now been discovered that resistance to internal pressure can be improved in case the pipe has an eccentric shape/dimensions.

Therefore, the present invention provides a polymer pipe having a relative eccentricity of at least 0.03, whereby the relative eccentricity ($e_r$) is defined as follows

$$e_r = \frac{S_{max} - S_{min}}{S_{max} + S_{min}} \qquad \text{(I)}$$

wherein

$S_{max}$ is the maximum wall thickness of the pipe; and
$S_{min}$ is the minimum wall thickness of the pipe.

The relative eccentricity ($e_r$) is calculated as follows.

$$e_r = \frac{E}{S_{av}} \qquad \text{(II)}$$

wherein

E is the eccentricity of the pipe
$S_{av}$ is the average wall thickness of the pipe

The eccentricity (E) is calculated as follows

$$E = \frac{S_{max} - S_{min}}{2} \qquad \text{(III)}$$

$S_{max}$ and $S_{min}$ are as defined for formula (I) above.

The average wall thickness of the pipe is calculated as follows.

$$S_{av} = \frac{S_{max} + S_{min}}{2}$$

wherein

$S_{av}$ is the average wall thickness of the pipe; and
$S_{max}$ and $S_{min}$ are as defined for formula (I) above.

By combining equations (II) to (IV) equation (I) results.

It has been surprisingly found that in case the pipe has an eccentricity of at least 0.03 the resistance against internal pressure is significantly improved compared with a pipe having a concentric wall thickness made from the same material under otherwise identical conditions. Hence, using the same material a pipe having higher stability can be formed. Moreover, the inner circumference (diameter) of the pipe according to the present invention remains the same compared with a corresponding concentric pipe, i.e. the flow capacity is the same. Furthermore, the outer circumference (diameter) is also the same compared with a corresponding concentric pipe. Thus, the same pipe processing equipment as for concentric pipes can be used, i.e. no investments for additional equipment is needed. It only needs to be ensured that the pipes are welded together such that the inner contours of two consecutive pipes which are welded together are congruent. However, this can be easily accomplished by providing appropriate markings on the pipe.

XRD measurements were carried out on the pipes according to the present invention whereupon we found that in the eccentric pipes according to the invention the circumferential orientation of the polymer molecules is far greater compared with a comparable pipe having even wall thickness.

In conventional pipe processing, axial orientation exist due to the processing nature, giving improved mechanical properties in longitudinal direction, like tensile and Charpy properties. Currently no circumferential orientation due to the standard processing means has been reported. Earlier studies and processing equipments designed to obtain circumferential orientation on the final pipe product in order to increase the resistance to hydrostatic pressure of plastic pipes. These studies cover either rotating die/mandrel sets to have circumferential surface orientation (US 3,404,203, CN 101 337 425) or a post processing step for circumferential orientation by enlarging the diameter of a pipe with a complicated process (Biaxially oriented polypropylene pipes: implications for impact and hydrostatic pressure resistance, Plastics, Rubber and Composites, Volume 35 Issue 10 (01 December 2006), pp. 447-454). Hence, existing methods are cumbersome and require specific equipment and/or additional process steps leading to higher costs.

To further investigate the how the increased circumferential orientation may occur heat transfer simulations were carried out (cf. experimental part for details). It has been found that the thinner part of the pipe is colder and, thus, the crystallisation is initiated there. The crystallisation then seems to propagate from the thinnest part to the thickest part around the pipe leading to higher circumferential orientation of the pipe. This improved circumferential orientation seems to compensate for the local lower thickness of the pipe which would usually be expected to be a weak spot. Thus, with the same polymer material pipes having improved internal pressure resistance can be formed.

In the present invention the term "fluid" includes both the liquid and gases.

The polymer pipe is having a relative eccentricity of at least 0.03, preferably at least 0.10, even more preferably at least 0.14 and most preferably at least 0.2. The relative eccentricity is usually not higher than 0.30, preferably not higher than 0.25. Usually and preferably the pipe has the same eccentricity along its length.

The pipe may be a linear pipe. "Linear pipe" denotes that the pipe has a linear flow direction along its length. The pipe may alternatively be bent, e.g. may have a helical structure, such as a spring. As in case of a bent pipe a definition of the eccentricity based on the pipe as a whole is geometrically not feasible in the following it is referred to the cross-sections of the pipe perpendicular to the flow direction. Usually the outer circumference and/or the inner circumference of each cross-section of the pipe, the cross-section being perpendicular to the flow direction of the pipe are circular. In the present invention "circular" with regard to the outer circumference denotes that the deviation from perfect circularity of the outer circumference (Dev(out)) calculated as follows

$$Dev(out) = \frac{OD_{max} - OD_{min}}{\dfrac{OD_{max} + OD_{min}}{2}}$$

**EP 3 067 608 A1**

with

OD$_{max}$ being the maximum outer diameter of the pipe
OD$_{min}$ being the minimum outer diameter of the pipe
is less than 10.0 %, preferably less than 8.0%.
OD$_{max}$ and OD$_{min}$ are determined as specified in ISO4427-2.

Preferably the deviation from perfect circularity (Dev(out)) and the average outer diameter OD of the pipe calculated as follows

$$OD = \frac{OD_{max} + OD_{min}}{2}$$

with OD$_{max}$ and OD$_{min}$ are as defined above
fulfil the following relationship

$$\sqrt{OD} \times Dev(out) \leq 70$$

with Dev(out) given in %.
More preferably

$$\sqrt{OD} \times Dev(out) \leq 50$$

and most preferably

$$\sqrt{OD} \times Dev(out) \leq 35.$$

In the present invention "circular" with regard to the inner circumference denotes that the deviation from perfect circularity of the inner circumference (Dev(in)) calculated as follows

$$Dev(in) = \frac{ID_{max} - ID_{min}}{\frac{ID_{max} + ID_{min}}{2}}$$

with

ID$_{max}$    being the maximum inner diameter of the pipe
ID$_{min}$    being the minimum inner diameter of the pipe

is less than 10.0 %, preferably less than 8.0%.
ID$_{max}$ and ID$_{min}$ are determined analogous to the procedures as specified in ISO4427-2.
Preferably the deviation from perfect circularity (Dev(in)) and the average inner diameter ID of the pipe calculated as follows

$$ID = \frac{ID_{max} + ID_{min}}{2}$$

with ID$_{max}$ and ID$_{min}$ are as defined above
fulfil the following relationship

4

$$\sqrt{ID} \times Dev(in) \le 70$$

with Dev(in) given in %.

More preferably

$$\sqrt{ID} \times Dev(in) \le 50$$

and most preferably

$$\sqrt{ID} \times Dev(in) \le 35.$$

Usually the maximum wall thickness of the pipe and the minimum wall thickness of the pipe are determined on the same cross-section of the pipe, the cross-section being perpendicular to the flow direction of the pipe. Usually each of these cross-sections meet the requirements of the present invention. Preferably, said cross-section is identical along the entire length of the pipe.

The polymer pipe preferably has an outer diameter of at least 20 mm, more preferably of at least 25 mm and most preferably of at least 32 mm. Usually the outer diameter of the pipe according to invention is not more than 260 mm, preferably not more than 170 mm and most preferably not more than 120 mm.

The average wall thickness of the pipe ($S_{av}$) is preferably between 2.0 mm and 12, more preferably between 2.0 mm and 8.0 mm and most preferably from 2.0 mm to 5.0 mm.

As already outlined above, with the above eccentricities the performance of the obtained pipe in the hoop stress test according to ISO 1167 is significantly improved compared with a concentric pipe made from the identical material under otherwise identical conditions.

In one embodiment the pipe has an eccentricity (E) of at least 0.13, an outer diameter of 32 mm and an average wall thickness ($s_{av}$) of 3.2 mm.

Preferably the polymer pipe is having a failure time of at least 200 hours in the test according to ISO 1167 determined at 5.7 MPa and 80°C, more preferably at least 250 hours in the test according to ISO 1167 determined at 5.7 MPa and 80°C, even more preferably at least 450 hours in the test according to ISO 1167 determined at 5.7 MPa and 80°C. In a preferred embodiment the failure time in the test according to ISO 1167 determined at 5.7 MPa and 80°C is at least 4000 hours. In a particular preferred embodiment the failure time in the test according to ISO 1167 determined at 5.7 MPa and 80°C is at least 6000 hours.

Preferably the polymer pipe is having a failure time of at least 100 hours in the test according to ISO 1167 determined at 5.9 MPa and 80°C, more preferably at least 1000 hours in the test according to ISO 1167 determined at 5.9 MPa and 80°C. In a preferred embodiment the failure time in the test according to ISO 1167 determined at 5.9 MPa and 80°C is at least 2000 hours.

Preferably the polymer pipe is having a failure time of at least 10 hours in the test according to ISO 1167 determined at 6.1 MPa and 80°C, more preferably at least 150 hours in the test according to ISO 1167 determined at 6.1 MPa and 80°C. In a preferred embodiment the failure time in the test according to ISO 1167 determined at 6.1 MPa and 80°C is at least 700 hours.

Preferably, the time until failure of the pipe according to the present invention in the test according to ISO 1167 at a pressure ranging from 5.4 to 6.1 MPa is at least 1.5 times higher compared with the time until failure of a pipe at the same pressure having a constant wall thickness identical to the average wall thickness $S_{av}$ of the pipe according to the present invention, having the same inner and outer contours, made from the same polymer composition under the same conditions, more preferably, the time until failure of the pipe according to the present invention in the hoop stress test according to ISO 1167 at a pressure ranging from 5.4 to 6.1 MPa is at least 2.0 times higher compared with the time until failure of a pipe at the same pressure having a constant wall thickness identical to the average wall thickness $S_{av}$ of the pipe according to the present invention, having the same inner and outer contours, made from the same polymer composition under the same conditions, even more preferably, the time until failure of the pipe according to the present invention in the hoop stress test according to ISO 1167 at a pressure ranging from 5.4 to 6.1 MPa is at least 3.0 times higher compared with the time until failure of a pipe at the same pressure having a constant wall thickness identical to the average wall thickness $S_{av}$ of the pipe according to the present invention, having the same inner and outer contours, made from the same polymer composition under the same conditions.

Usually the failure time in a hoop stress test according to ISO 1167 at a pressure ranging from 5.4 to 6.1 MPa is not more than 450 times higher compared to a concentric pipe having the same inner and outer diameter, made from the same polymer composition under the same conditions.

The polymer pipe maybe a polyolefin pipe such as a polyethylene pipe or a polypropylene pipe, e.g. made from a material having a σLPL value of at least 10 MPa (predicted long term hydrostatic strength) according to ISO 9080. Preferably, the polymer pipe consists of a polymer composition, the polymer composition having a viscosity at a shear stress of 747 Pa ($\eta_{747Pa}$) of at least 650 kPa·s. The method for determining the viscosity at a shear stress of 747 Pa $\eta_{747Pa}$) is described in the experimental part.

The polymer pipe preferably has a polymer content of at least 70 wt.% based on the pipe, more preferably at least 80 wt.%, even more preferably at least 90 wt.% and most preferably at least 95 wt.% based on the pipe.

The polymer pipe is preferably a polyolefin pipe, more preferably the polyolefin pipe consists of a polyolefin composition, the polyolefin composition comprising

- an ethylene homo- or copolymer (A) and/or

  a propylene homo- or copolymer (B),
  preferably
  an ethylene homo- or copolymer (A) or
  a propylene homo- or copolymer (B);

- optionally, carbon black; and
- optionally, conventional additives.

The total amount of ethylene homo- or copolymer (A) and propylene homo- or copolymer (B) is preferably at least 70 wt.% based on the total polyolefin composition, more preferably at least 80 wt.%, even more preferably at least 90 wt.% and most preferably at least 95 wt.% based on the total polyolefin composition.

The ethylene homo- or copolymer (A) preferably has a density of from 0.930 $g/cm^3$ to 0.965 $g/cm^3$, more preferably of 0.940 $g/cm^3$ to 0.965 $g/cm^3$ and most preferably 0.950 $g/cm^3$ to 0.960 $g/cm^3$.

Ethylene homo- or copolymer (A) preferably has a viscosity at a shear stress of 747 Pa ($\eta_{747Pa}$) of at least 650 kPa·s. The method for determining the viscosity at a shear stress of 747 Pa ($\eta_{747Pa}$) is described in the experimental part.

Ethylene homo- or copolymer (A) preferably has a melt flow rate $MFR_5$, determined according to ISO 1133 at 190°C and under a load of 5.00 kg, of 0.05 to 2.0 g/10 min, more preferably 0.1 to 1.0 g/10 min and most preferably 0.15 to 0.8 g/10 min.

The ethylene homo- or copolymer (A) is preferably an ethylene copolymer having a comonomer content of 0.1 to 2.0 mol%, more preferably 0.1 to 1.0 mol% based on the total weight of component (A).

As comonomers $C_4$ to $C_{20}$ alpha-olefins are preferred, more preferred are $C_4$ to $C_8$ alpha-olefins, such as 1-butene, 1-hexene, 4-methyl-1-pentene and 1-octene. Ethylene homo- or copolymer (A) preferably comprises, more preferably consists of, i) a low molecular weight ethylene homopolymer or -copolymer and ii) a high molecular weight ethylene homopolymer or -copolymer.

Preferably the weight ratio between i) and ii) is (35-55):(65-45), more preferably (43-51):(57-49) and most preferably (44-50):(56-50).

Usually, ethylene homo- or copolymer (A) is comprising at least two polyethylene fractions, which have been produced under different polymerisation conditions resulting in different (weight average) molecular weights and molecular weight distributions for the fractions. Such a polymer is usually referred to as "multimodal". Accordingly, in this sense the ethylene homo- or copolymer (A) of the invention is a multimodal polyethylene. The prefix "multi" relates to the number of different polymer fractions the ethylene homo- or copolymer (A) is consisting of. Thus, in case ethylene homo- or copolymer (A) is consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer, such as ethylene homo- or copolymer (A), is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

Ethylene homo- or copolymer (A) is preferably produced in a multistage process wherein e.g. fractions (i) and (ii) are produced in subsequent stages. In such a case, the properties of the fractions produced in the second step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the fractions produced in higher stages of such a multistage process are usually be determined by applying either or both of the above methods. In the present invention the values are usually calculated in accordance with B. Hagström.

For example, WO 00/01765 and WO 00/22040 describe bi- or multimodal polyethylenes usable in the present invention.

Preferably the ethylene homo- or copolymer (A) is multimodal, more preferably bimodal.

In case ethylene homo- or copolymer (A) is comprising or consisting of fractions i) and ii), preferably fraction i) is a homopolymer and fraction ii) is a copolymer.

In case fraction ii) is an ethylene copolymer, preferably fraction ii) is an ethylene copolymer comprising 0.1 to 2.0 mol% comonomer, even more preferably 0.1 to 1.0 mol% comonomer. The comonomer is preferably selected from alpha-olefins having 4 to 20 carbon atoms, more preferably 4 to 8 carbon atoms, such as 1-butene, 1-hexene, 4-methyl-1-pentene and 1-octene.

The propylene homo- or copolymer (B) preferably has a density of from 0.890 $g/cm^3$ to 0.915 $g/cm^3$, more preferably of 0.895 $g/cm^3$ to 0.915 $g/cm^3$ and most preferably 0.900 $g/cm^3$ to 0.910 $g/cm^3$.

Preferably the propylene homo- or copolymer (B) has a melt flow rate MFR, determined according to ISO 1133 at 230°C and under a load of 2.16 kg, of 0.05 to 2.0 g/10 min, more preferably 0.1 to 1.0 g/10 min and most preferably 0.15 to 0.7 g/10 min.

The propylene homo- or copolymer (B) is preferably a propylene homo- or random copolymer.

A propylene random copolymer denotes a copolymer of propylene monomer units and comonomer units in which the comonomer units are randomly distributed in the polymeric chain. Thereby, a propylene random copolymer includes a fraction, which is insoluble in xylene -xylene cold insoluble (XCU) fraction-, in an amount of at least 70 wt%, more preferably of at least 80 wt%, still more preferably of at least 85 wt% and most preferably of at least 90 wt%, based on the total amount of the propylene random copolymer.

The random copolymer does not comprise an elastomeric phase dispersed therein. As known for skilled person, random copolymer is different from heterophasic polypropylene which is a propylene copolymer comprising a propylene homo or random copolymer matrix component (1) and an elastomeric copolymer component (2) of propylene with one or more of ethylene and $C_4$-$C_8$ alpha-olefin copolymers, wherein the elastomeric (amorphous) copolymer component (2) is dispersed in said propylene homo or random copolymer matrix polymer (1).

Usually, a propylene polymer comprising at least two propylene polymer fractions (components), which have been produced under different polymerisation conditions resulting in different (weight average) molecular weights and/or different comonomer contents for the fractions, preferably produced by polymerizing in multiple polymerization stages with different polymerization conditions, is referred to as "multimodal". The prefix "multi" relates to the number of different polymer fractions the propylene polymer is consisting of. As an example of multimodal polypropylene, a propylene polymer consisting of two fractions only is called "bimodal", whereas a propylene polymer consisting of three fractions only is called "trimodal".

Thereby the term "different" means that the propylene polymer fractions differ from each other in at least one property, preferably in the weight average molecular weight or comonomer content or both, more preferably at least in the weight average molecular weight.

The form of the molecular weight distribution curve, i.e. the appearance of the graph of the polymer weight fraction as function of its molecular weight, of such a multimodal propylene polymer is at least distinctly broadened in comparison with the curves for the individual fractions.

The propylene random copolymer used in the present invention is preferably a multimodal propylene random copolymer, more preferably a bimodal propylene random copolymer. Preferably, the propylene random copolymer consists of the two propylene copolymer fractions with the proviso that at least one of the two fractions, preferably both fractions are propylene random copolymer fractions.

A propylene homopolymer thereby denotes a polymer consisting essentially of propylene monomer units. Due to the requirements of large- scale polymerization it may be possible that the propylene homopolymer includes minor amounts of comonomer units, which usually is below 0.1 mol%, preferably below 0.05 mol%, most preferably below 0.01 mol% of the propylene homopolymer.

The propylene random copolymer used in the polypropylene composition of the invention comprises at least one comonomer selected from alpha- olefins with 2 or 4 to 8 carbon atoms.

The propylene random copolymer may comprise only one type of comonomers or two or more types of comonomers.

The comonomers of said propylene random copolymer are preferably selected from $C_2$ and $C_4$ to $C_6$ alpha-olefins. A particular preferred comonomer is ethylene. Especially suitable for the polypropylene composition of the present invention is a propylene random copolymer which is a propylene random copolymer with ethylene comonomer.

It is preferred that the propylene random copolymer, which is preferably the propylene copolymer with ethylene comonomer, comprises at least a propylene random copolymer having a low molecular weight (low molecular weight (LMW) fraction) and a propylene random copolymer having a high molecular weight (high molecular weight (HMW) fraction). Thereby, the LMW fraction has a lower weight average molecular weight than the HMW fraction.

It is well known that melt flow rate (MFR) of a polymer is an indication of the weight average molecular weight (Mw) of the polymer, the higher the MFR the lower the Mw of the polymer and, respectively, the lower the MFR the higher the Mw of the polymer. Accordingly, the MFR of the low molecular weight fraction is higher than the MFR of the high molecular weight fraction. The low molecular weight fraction has preferably a $MFR_2$ of from 0.2 to 3.0 g/10 min, more preferably a $MFR_2$ from 0.25 to 2.0 g/10 min, more preferably from 0.3 to 2.0 g/10 min and most preferably of 0.35 to 2.0 g/10 min. Preferably both the low molecular weight fraction and the high molecular weight fraction are propylene random copolymer fractions which may have essentially the same or different comonomer content. It is preferred that the comonomer content of the high molecular weight fraction is equal to or higher than, preferably higher than the comonomer content of the low molecular weight fraction.

The comonomer content of the low molecular weight fraction is usually in the range of 1.0 to 6.0 mol%, preferably 2.0 to 5.5 mol%, more preferably 3.0 to 5.0 mol%, most preferably 3.5 to 4.5 mol%, based on the total content of monomer units in the low molecular weight fraction.

The comonomer content of the high molecular weight fraction is usually in the range of 5.5 to 12 mol%, preferably 6.0 to 11.0 mol%, more preferably 6.5 to 10.0 mol%%, still more preferably 7.0 to 9.0 mol%, most preferably 7.5 to 8.5 mol%, based on the total content of monomer units in the high molecular weight fraction.

In a preferred embodiment, the propylene random copolymer is a propylene random copolymer with ethylene comonomer comprising at least a propylene random copolymer having a low molecular weight (low molecular weight (LMW) fraction) and a propylene random copolymer having a high molecular weight (high molecular weight (HMW) fraction) and a higher content of comonomer, preferably ethylene comonomer, than the low molecular weight fraction (LMW fraction). In this preferred embodiment the content of the comonomer, preferably ethylene comonomer in the LMW fraction, is within the preferred ranges as defined above. The comonomer content of the propylene random copolymer is usually in the range of 4.5 to 9.5 mol%, preferably 5.0 to 9.0 mol%, more preferably 5.5 to 8.0 mol%, still more preferably 5.5 to 7.5 mol%, most preferably 5.7 to 7.0 mol%, based on the total content of monomer units in the propylene random copolymer. The low molecular weight fraction and the high molecular weight fraction may include the same type of comonomer or different types of comonomers. It is preferred that both fractions include the same type of comonomer.

The low molecular weight fraction is preferably present in the propylene random copolymer in an amount of 30 to 50 wt%, more preferably in an amount of 35 to 47 wt% and most preferably in an amount of 37 to 47 wt%, based on the total amount of the propylene random copolymer (100 wt%), preferably, and the high molecular weight fraction is preferably present in the propylene random copolymer in an amount of 70 to 50 wt%, more preferably in an amount of 65 to 53 wt% and most preferably in an amount of 63 to 53 wt%, based on the total amount of the propylene random copolymer (100wt%).

The propylene random copolymer preferably has a density of 890 to 910 $kg/m^3$, preferably 895 to 905 $kg/m^3$.

It is preferred that the propylene random copolymer consists of the propylene random copolymer having a low molecular weight (low molecular weight (LMW) fraction), the propylene random copolymer having a high molecular weight (high molecular weight (HMW) fraction).

The multimodal propylene random copolymer may further comprise a prepolymer fraction. In case of the presence of a prepolymer fraction, said fraction is calculated to the amount (wt%) of the low molecular weight fraction or high molecular weight fraction, preferably to the amount of low molecular weight fraction. The prepolymer fraction can be propylene homopolymer or copolymer.

For example, WO 2014/173530 describes polypropylenes usable in the present invention.

The polymer pipe, preferably, the preferred polyolefin composition the pipe is consisting of, preferably comprises carbon black. If present, the carbon black is preferably present in amount of 0.10 to 10 wt.% carbon black based on the total weight of the polymer pipe, preferably, the preferred polyolefin composition the pipe is consisting of, more preferably 0.50 to 5.0 wt.% carbon black based on the total weight of the polymer pipe, preferably, the preferred polyolefin composition the pipe is consisting of and most preferably 0.75 to 3.5 wt.% carbon black based on the total weight of the polymer pipe polymer pipe, preferably, based on the preferred polyolefin composition the pipe is consisting of.

The polyolefin composition preferably has a density of from 0.890 $g/cm^3$ to 0.970 $g/cm^3$.

In case the polyolefin composition comprises an ethylene homo- or copolymer (A), optionally additionally comprising carbon black and/or conventional additives in the amounts according to the present invention, the polyolefin composition preferably has a density of from 0.935 $g/cm^3$ to 0.970 $g/cm^3$, more preferably of 0.945 $g/cm^3$ to 0.970 $g/cm^3$

and most preferably 0.955 g/cm$^3$ to 0.965 g/cm$^3$.

In case the polyolefin composition comprises an ethylene homo- or copolymer (A), optionally additionally comprising carbon black and/or conventional additives in the amounts according to the present invention, the polyolefin composition preferably has a melt flow rate MFR$_5$, determined according to ISO 1133 at 190°C and under a load of 5.00 kg, of 0.05 to 2.0 g/10 min, more preferably 0.1 to 1.0 g/10 min and most preferably 0.15 to 0.8 g/10 min.

In case the polyolefin composition comprises an a propylene homo- or copolymer (B), optionally additionally comprising carbon black and/or conventional additives in the amounts according to the present invention, the polyolefin composition preferably has a density of from 0.890 g/cm$^3$ to 0.915 g/cm$^3$, more preferably of 0.895 g/cm$^3$ to 0.915 g/cm$^3$ and most preferably 0.900 g/cm$^3$ to 0.910 g/cm$^3$.

In case the polyolefin composition comprises an a propylene homo- or copolymer (B), optionally additionally comprising carbon black and/or conventional additives in the amounts according to the present invention, the polyolefin composition preferably has a melt flow rate MFR, determined according to ISO 1133 at 230°C and under a load of 2.16 kg, of 0.05 to 2.0 g/10 min, more preferably 0.1 to 1.0 g/10 min and most preferably 0.15 to 0.7 g/10 min.

In case the polyolefin composition comprises an a propylene homo- or copolymer (B), optionally additionally comprising carbon black and/or conventional additives in the amounts according to the present invention, the polyolefin composition preferably has a content of xylene cold solubles (XCS) of from 1.0 to 15.0 wt%, preferably of from 2.0 to 12.0 wt%, more preferably of from 4.0 to 10.0 wt%, determined at 25°C according to ISO 16152.

The material the polymer pipe is consisting of, preferably, the preferred polyolefin composition the pipe is consisting of, optionally additionally comprising carbon black and/or conventional additives in the amounts according to the present invention, preferably has a viscosity at a shear stress of 747 Pa (η747Pa) of at least 650 kPa·s.

The polymer pipe, preferably, the preferred polyolefin composition the pipe is consisting of, according to the present invention usually comprises conventional additives for utilization with polyolefins different from carbon black, such as pigments, stabilizers (antioxidant agents), antacids and/or anti-UVs, antistatic agents, clarifiers, brighteners and utilization agents (such as processing aid agents) preferably, the amount of these additives is 10 wt.% or below based on the total amount of the polymer pipe, preferably, the preferred polyolefin composition the pipe is consisting of, further preferred 8 wt.% or below, still more preferred 4 wt.% or below of the polymer pipe, preferably, the preferred polyolefin composition the pipe is consisting of. Such additives are generally commercially available and are described, for example, in "Plastics Additives handbook", 5th edition, 2011 of Hans Zweifel. The conventional additives are usually present in an amount of at least 0.1 wt.% based on the total amount of the polymer pipe, preferably, the based on preferred polyolefin composition the pipe is consisting of. Usually, the conventional additives are present in an amount of not more than 1.0 wt.%, preferably not more than 0.70 wt.%.

It is preferred that the polymer pipe, preferably, the preferred polyolefin composition the pipe is consisting of, does not comprise a polymeric nucleating agent that is added on purpose to function as a nucleating agent. More preferably, the polymer pipe, preferably, the preferred polyolefin composition the pipe is consisting of, does not comprise (i.e. is void of) a polymeric nucleating agent, selected from a polymerized vinyl compound according to the following formula

$$CH_2=CH-CHR^1R^2$$

wherein
R$^1$ and R$^2$ together form a 5- or 6-membered saturated, unsaturated or aromatic ring, optionally containing substituents, or independently represent an alkyl group comprising 1 to 4 carbon atoms, whereby in case R$^1$ and R$^2$ form an aromatic ring, the hydrogen atom of the -CHR$^1$R$^2$ moiety is not present, for example vinyl cyclohexane (VCH) polymer.

Conventional additives and carbon black are often not added in pure form as the handling of powders, especially carbon black powders, requires additional safety precautions. Therefore, additives and carbon black are often added as so-called masterbatches, i.e. are dispersed in a polymer in high concentration. Said masterbatches are then combined with the polymer the additive should be added to. Thus, the pipe and the polyolefin composition the pipe is preferably consisting of may comprise additional polymers besides component (A) and/or (B), including, preferably consisting of, the polymers added as masterbatches, if any, besides component (A) and/or (B) in an amount of not more than 10 wt.% based on the pipe, preferably not more than 5 wt.% based on the pipe.

Preferably the polyolefin composition consists of

- the ethylene homo- or copolymer (A) and/or
  the propylene homo- or copolymer (B),
  preferably
  the ethylene homo- or copolymer (A) or
  the propylene homo- or copolymer (B);
- conventional additives in the amounts according to the present invention;

- optionally carbon black in the amounts according to the present invention;
- optionally additional polymers besides components (A) and/or (B) in the amounts according to the present invention.

In an even more preferred embodiment the polyolefin composition consists of

- the ethylene homo- or copolymer (A) and/or

  the propylene homo- or copolymer (B),
  preferably
  the ethylene homo- or copolymer (A) or
  the propylene homo- or copolymer (B)

- conventional additives in the amounts according to the present invention;
- carbon black in the amounts according to the present invention;
- optionally and preferably additional polymers besides component (A) and/or (B) in the amounts according to the present invention.

The present invention is furthermore directed to a process for producing a pipe according to the present invention.
The process preferably comprised the following steps:

i.) providing a molten polymer composition, preferably the preferred polyolefin composition;
ii.) melt extruding the molten polymer composition, preferably the preferred polyolefin composition, through a mandrel and die set;
iii.) cooling the molten polymer composition, preferably the preferred polyolefin composition, after exiting the mandrel and die set

whereby the die and the mandrel are adjusted such that to lead a pipe having relative eccentricity of at least 0.03.
The relative eccentricity of the pipe is determined as defined above and below.
In order to produce the eccentric pipe of the invention the mandrel and/or the die of the mandrel and die set used to produce a concentric pipe is adjusted and the eccentricity of the pipe is determined. The necessary adjustments depend on the desired diameter and wall thickness of the pipe but can be figured out within a few experiments. Usually either the mandrel or the die of the mandrel and die set used to produce a concentric pipe is adjusted and the eccentricity of the pipe is determined. The preferred features of the pipe according to the present invention are also preferred features of the process according to the present invention and vice versa. The present invention is furthermore directed to the use of the polymer pipe according to the invention for the transport of pressurized fluids.
The preferred features of the pipe and process according to the present invention are also preferred features of the use according to the present invention and vice versa
The present invention will now be described by the following non-limiting examples.

EXPERIMENTAL PART:

viscosity at a shear stress of 747 Pa ($\eta_{747Pa}$)

The determination is made by using a rheometer, preferably a Bohlin CS Melt Rheometer. Rheometers and their function have been described in "Encyclopedia of Polymer Science and Engineering", 2nd Ed., Vol. 14, pp. 492-509. The measurements are performed under a constant stress between two 25 mm diameter plates (constant rotation direction). The gap between the plates is 1.8 mm. An 1.8 mm thick polymer sample is inserted between the plates.
The sample is temperature conditioned during 2 min before the measurement is started. The measurement is performed at 190 °C. After temperature conditioning the measurement starts by applying the predetermined stress.
The stress is maintained during 1800 s to let the system approach steady state conditions. After this time the measurement starts and the viscosity is calculated. The measurement principle is to apply a certain torque to the plate axis via a precision motor. This torque is then translated into a shear stress in the sample. This shear stress is kept constant. The rotational speed produced by the shear stress is recorded and used for the calculation of the viscosity of the sample.
For determination of the viscosity at a shear stress of 747 Pa ($\eta_{747Pa}$) the pipe is remelted.

Measurement of pipe wall thickness

A pipe wall gauge produced by Sciteq Denmark, having an electronic thickness gauge (Mahr, MarCator 1088) and a printer (Mitutoyo DP-1 VR)

The average wall thickness $S_{av}$ is then calculated as follows.

$$S_{av} = \frac{S_{min} + S_{max}}{2}$$

whereby

$S_{min}$     is the minimum wall thickness of the pipe; and
$S_{max}$    is the maximum wall thickness of the pipe

Density

All densities are measured according to ISO 1183-187. Sample preparation is done by compression moulding in accordance with ISO 1872-2:2007.

Melt flow rate (MFR)

The MFR is determined according to ISO 1133.

Comonomer content

13C-NMR analysis was used to determine the comonomer content of the samples. Samples were prepared by dissolving approximately 0.100 g of polymer and 2.5 ml of solvent in a 10 mm NMR tube. The solvent was a 90/10 mixture of 1,2,4-trichlorobenzene and benzene-d6. Samples were dissolved and homogenised by heating the tube and its contents at 150 C in a heating block.

The proton decoupled carbon-13 single pulse NMR spectra with NOE were recorded on a Joel ECX 400 MHz NMR spectrometer. The acquisition parameters used for the experiment included a flip-angle of 45 degrees, 4 dummy scans, 3000 transients and a 1.6 s acquisition time, a spectral width of 20kHz, temperature of 125 C, WALTZ decoupling and a relaxation delay of 6.0 s. The processing parameters used included zero-filling to 32k data points and apodisation using an exponential window function within 1.0 Hz artificial line broadening followed by automatic zeroth and first order phase correction and automatic baseline correction.

Comonomer contents were calculated using integral ratios taken from the processed spectrum using the assignments described in JC. Randall's work (JMS - Rev. Macromol. Chem. Phys. , C29(2&3), 201 -317 (1989) using:

$$E = (\alpha B + \alpha H + \beta B + \beta H + \gamma B + \gamma H + \delta++)/2$$

$$B = (\text{methine } B + 2B + 1\ B)/3$$

$$H = (\text{methine } H + 4H + 3H + 2H)/4$$

where methine is the CH branch site, alpha, beta, gamma the carbon sits adjacent to the CH i.e. CH , alpha, beta, gamma, delta. \delta++ is the bulk CH2 site and the 1,2,3 and 4 sites representing the various carbon sites along the branch with the methyl group being designated 1 .

$$CE = 100\% * E/(E+B+H)$$

$$CB = 100\% * B/(E+B+H)$$

$$CH = 100\% * H/(E+B+H)$$

Resistance to internal pressure

The resistance to internal pressure of pipes has been determined according to ISO 1167-1 on pipes having an outer diameter of 32 mm and an average wall thickness of 3.2 mm. The measurement has been carried out at 5.7 MPa. Internal pressure of the pipe is calculated according to following equation given in ISO1167-1

$$p = 10\sigma \frac{2e_{min}}{d_{em} - e_{min}}$$

where

$\sigma$      is the hoop stress to be induced by the applied pressure, in MPa,
$d_{min}$    is the minimum wall thickness of the free length of the test piece, in millimetres, and
$d_{em}$     is the mean outside diameter of the test piece, in millimetres.

XRD measurement:

Diffractograms were obtained in transmission geometry with a Bruker D8 Discover equipped with an X-ray tube with a copper target operating at 40kV and 40mA and a GADDS 2-D detector, on thin slices cut from the pipes. The intensity vs. $\varphi$ curves of (110) and (200) diffraction planes were obtained by integrating the 2D diffractograms within the relevant $2\theta$ ranges.

The Hermans a-axis orientation factor $f_a$ was obtained as

$$f_a = \frac{3<\cos^2\varphi_{a,Z}>-1}{2}$$

where

$$<\cos^2\varphi_{a,Z}> = <\cos^2\varphi_{200,Z}>$$

and Hermans b-axis orientation factor $f_b$ was obtained as

$$f_b = \frac{3<\cos^2\varphi_{b,Z}>-1}{2}$$

where

$$<\cos^2\varphi_{b,Z}> = <\cos^2\varphi_{110,Z}>-0.308<\cos^2\varphi_{200,Z}>0.692$$

[Min K, White JL, Fellers JF, J. Appl. Polym. Sci. 29, 2117 (1984)]

The Hermans c-axis orientation factor $f_c$ is calculated using the orthogonality relationship

$$f_a + f_b + f_c = 0.$$

The values of

$$\left<\cos^2\varphi_{hkl,Z}\right>$$

is defined in general, for the reflection from the (hkl) plane as:

$$\left<\cos^2\varphi_{hkl,Z}\right> = \frac{\int_0^{2\pi} I(\varphi)\sin\varphi\cos^2\varphi\,d\varphi}{\int_0^{2\pi} I(\varphi)\sin\varphi\,d\varphi}$$

Xylene cold solubles (XCS, wt.-%)
The XCS content was determined at 25 °C according ISO 16152; first edition; 2005-07-01.

EXAMPLES:

In all examples a polyethylene composition comprising 2 wt.% carbon black having a density of 0.959 g/cm$^3$ an MFR$_5$, determined according to ISO 1133 at 190°C and under a load of 5.00 kg, of 0.25 g/10 min, (Borsafe HE3490-LS)
Pipes having an outer diameter of 32 mm and an average wall thickness of 3.2 mm with relative eccentricities provided in table 1 below have been produced using the above composition on a Reifenhäuser RH 381 pipe extruder with a die head of 32 mm. The temperature profile during extrusion was 175°C to 185°C [175-180-185-185-185-185]. The cooling of the pipes after the die exit has been taken place by spraying cooling water at 20 °C on the pipe outer surface.
The results of resistance to internal pressure test according to ISO 1167 in hours are given in the following table 1.

Table 1

| Applied Stress (MPa) | Relative Eccentricity (Er) | Failure Time (h) |
|---|---|---|
| 5.7 | 0 | 94 |
| | 0.04 | 519 |
| | 0.1 | >6000* |
| | 0.14 | >6000 |
| 5.9 | 0 | 36 |
| | 0.04 | 134 |
| | 0.1 | 1101 |
| | 0.14 | >2000** |
| 6.1 | 0 | 4 |
| | 0.04 | 13 |
| | 0.1 | 187 |
| | 0.14 | 843 |
| * Test stopped without failure<br>** Test ongoing | | |

As can be seen from the above the eccentric pipes according to the present invention have improved performance in the hoop stress test according to ISO 1167 compared with concentric pipes made from the same material and having the same average wall thickness.
XRD studies for OD32 mm pipes having relative eccentricity of 0 and 0.14 revealed that (Table 1), orientation of the molecules on the radial direction is reduced and orientation on the direction perpendicular to machine direction (MD) is increased at both inner surface and in the core of the pipe. These findings show that the eccentricity creates molecular orientation on circumferential (hoop) direction.

Table 2 Hermans orientation distribution factors ($f_a$ perpendicular to MD, $f_b$ radial direction, $f_c$ MD)

| Relative Eccentricity | Position | Position | $f_a$ | $f_b$ | $f_c$ |
|---|---|---|---|---|---|
| 0 | N/A | inner | -0.016 | -0.052 | 0.068 |
| | | core | -0.011 | -0.073 | 0.084 |
| | | outer | 0.01 | -0.068 | 0.058 |
| 0.14 | Thick | inner | -0.048 | -0.034 | 0.081 |
| | | core | -0.026 | -0.06 | 0.086 |
| | | outer | 0.01 | -0.067 | 0.057 |
| | Middle | inner | -0.035 | -0.037 | 0.071 |
| | | core | -0.024 | -0.064 | 0.088 |
| | | outer | 0 | -0.064 | 0.065 |
| | Thin | inner | -0.036 | -0.038 | 0.074 |
| | | core | -0.02 | -0.073 | 0.093 |

A heat transfer simulation study, using Ansys Polyflow performed to analyze the effect of eccentricity on the pipe wall temperature around circumference. A polymer melt at 200°C (BorSafe HE3490LS) entering in the first cooling tank having 20 °C water spray and 6.15m length, then entering into the second cooling tank having 20°C water spray and 9 meter length and a 0.9 m gap between the first cooling tank with a pipe production line speed at 4 m/min and 32 mm OD and 3.2 mm average wall thickness and eccentricity values (e) at 0, 0.13, 0.33 and 0.44 are used for simulations. A constant density value was employed equal to 750kg/m$^3$ and A constant thermal conductivity value was employed equal to 0.26W/m/K. Heat transfer coefficient for cooling water 360 W/(m$^2$ K) and Heat transfer coefficient for environment 10 W/(m$^2$ K) are used.

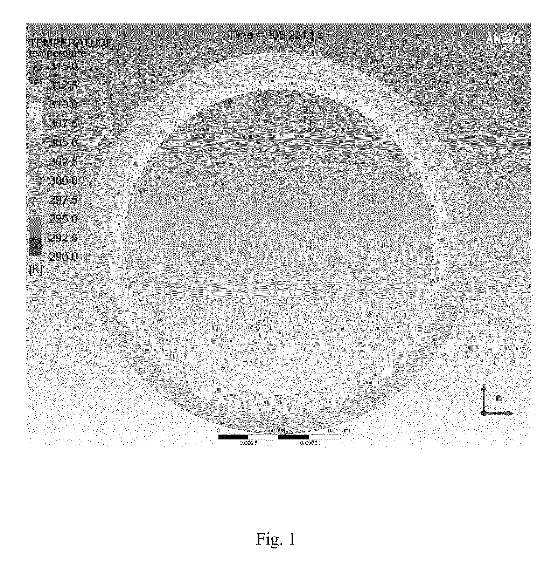

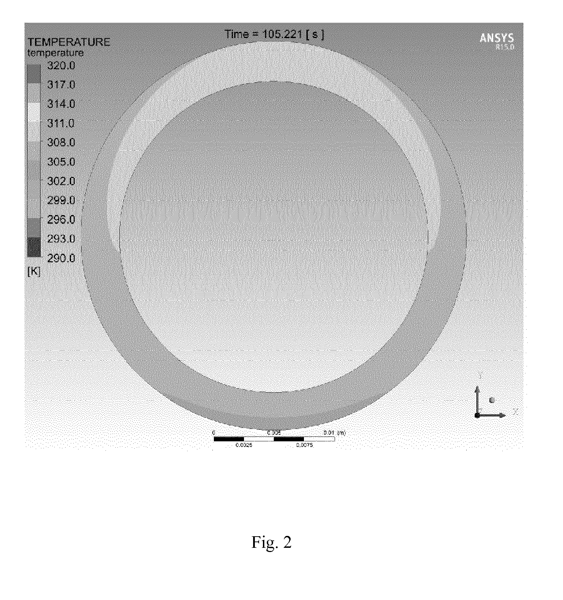

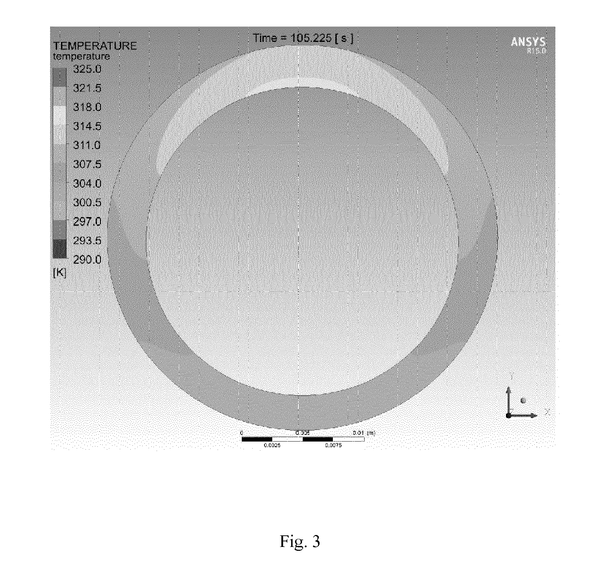

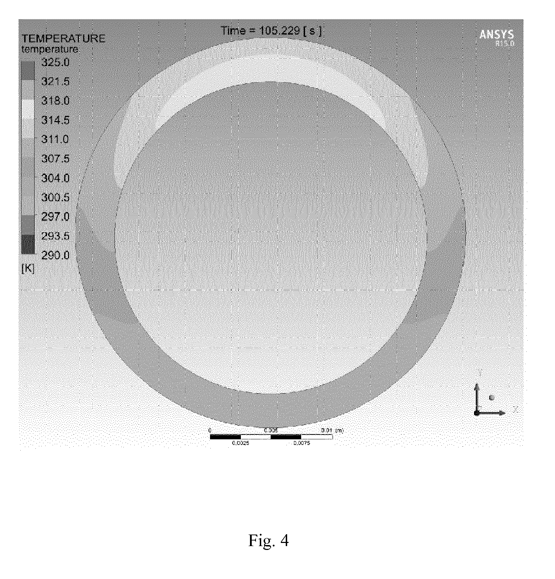

The results of the simulation study are verified with experimental temperature measurements at the outer surface of the pipe at different locations along the pipe production line. The heat transfer analysis showed that eccentricity changes the temperature profile of the pipe wall, leading a temperature gradient not only from outer to inner surface, but also from thicker part to the thinner part of the pipe. The temperature gradient is directly related to the time to reach the crystallization temperature of the material and crystallization rate. As shown in the Figure 1 to Figure 4, temperature is high at the thicker part of the pipe wall and less at the thinner part. Furthermore, temperature difference between outer and inner surface of the pipe is less at the thinner part compared to thick part.

Figure 1 shows the temperature profile of an OD 32 SDR11 pipe wall, with a relative eccentricity ($e_r$) of zero
Figure 2 shows the temperature profile of OD 32 SDR11 pipe wall, with $e_r$ = 0.04
Figure 3 shows the temperature profile of OD 32 SDR11 pipe wall, with $e_r$ = 0.1
Figure 4 shows the temperature profile of OD 32 SDR11 pipe wall, with $e_r$ = 0.14

**Claims**

1.   A polymer pipe having a relative eccentricity of at least 0.03, whereby the relative eccentricity ($e_r$) is defined as follows

$$e_r = \frac{S_{max} - S_{min}}{S_{max} + S_{min}} \qquad (I)$$

wherein

$S_{max}$ is the maximum wall thickness of the pipe; and
$S_{min}$ is the minimum wall thickness of the pipe.

2.   The polymer pipe according to claim 1 having a relative eccentricity of at least 0.05.

3. The polymer pipe according to any one of the preceding claims having a relative eccentricity of not more than 0.30.

4. The polymer pipe according to any one of the preceding claims which is a polyolefin pipe.

5. The polyolefin pipe according to claim 4, wherein the polyolefin pipe consists of a polyolefin composition, the polyolefin composition comprising

- an ethylene homo- or copolymer (A) and/or a propylene homo- or copolymer (B).

6. The polyolefin pipe according to claim 5, wherein the ethylene homo- or copolymer (A) has a density of from 0.930 $g/cm^3$ to 0.965 $g/cm^3$.

7. The polyolefin pipe according to any one of the preceding claims 4 to 6, wherein the polyolefin composition comprises an ethylene homo- or copolymer (A) and has a melt flow rate $MFR_5$, determined according to ISO 1133 at 190°C and under a load of 5.00 kg, of 0.05 to 2.0 g/10 min.

8. The polyolefin pipe according to claim 5 to 7 wherein the ethylene homo- or copolymer (A) is multimodal.

9. The polyolefin pipe according to any one of the preceding claims wherein the propylene homo- or copolymer (B) is a propylene homo- or random copolymer.

10. The polyolefin pipe according to any one of the preceding claims wherein the propylene homo- or copolymer (B) has a melt flow rate MFR, determined according to ISO 1133 at 230°C and under a load of 2.16 kg, of 0.05 to 2.0 g/10 min.

11. The polymer pipe according to any one of the preceding claims having an outer diameter of at least 20 mm.

12. The polyolefin polymer pipe according to any one of the preceding claims having a failure time of at least 450 hours in the hoop stress test according to ISO 1167 at 5.7 MPa.

13. The polymer pipe according to any one of the preceding claims having a failure time in the hoop stress test according to ISO 1167 at a pressure ranging from 5.4 to 6.1 MPa at least 1.5 times higher compared to a concentric pipe having the same inner and outer diameter, made from the same polyolefin composition under the same conditions.

14. A process for producing the polymer pipe according to any one of the preceding claims.

15. Use of the polymer pipe according to any one of claims 1 to 14 for the transport of pressurized fluids.

Fig. 1

Fig. 2

Fig. 3

Fig. 4

Europäisches
Patentamt

European
Patent Office

Office européen
des brevets

# EUROPEAN SEARCH REPORT

**Application Number**

EP 15 15 8508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AT 412 668 B (RAIMUND HARREITHER [AT]) 25 May 2005 (2005-05-25) | 1-3,14, 15 | INV. F16L9/00 |
| Y | * page 3, line 13 - line 35; claim 6; figures 1,2 * | 4-13 | |
| Y,D | WO 2014/173530 A1 (ABU DHABI POLYMERS COMPANY LTD BOROUGE [AE]; BOREALIS AG [AT]) 30 October 2014 (2014-10-30) * the whole document * | 4,5, 7-10,12, 13 | |
| Y,D | WO 00/22040 A1 (BOREALIS POLYMERS OY [FI]; BAECKMAN MATS [SE]; HEINO EEVA LEENA [FI];) 20 April 2000 (2000-04-20) * page 3, line 29 - page 4, line 20 * | 6,12,13 | |
| Y | US 3 451 434 A (BAUER EUGENE C JR) 24 June 1969 (1969-06-24) | 11 | |
| A | * column 2, line 30 - column 3, line 36; figures 1-4 * | 1-10, 12-15 | |
| A,D | WO 00/01765 A1 (BOREALIS POLYMERS OY [FI]; ASUMALAHTI MARKKU [FI]; AEAERILAEAE JARI [F] 13 January 2000 (2000-01-13) * the whole document * | 1-15 | TECHNICAL FIELDS SEARCHED (IPC) F16L |
| A | EP 0 228 000 A1 (ELPAG AG CHUR [CH]) 8 July 1987 (1987-07-08) * page 4, line 12 - page 7, line 19; figures 1-3 * | 1-15 | |
| A | GB 308 237 A (JAMES ALEX DENBY WATT) 20 March 1929 (1929-03-20) * page 1, line 34 - line 41; figure 1 * | 1-15 | |

The present search report has been drawn up for all claims

| Place of search | Date of completion of the search | Examiner |
|---|---|---|
| Munich | 17 August 2015 | Möbius, Henning |

EPO FORM 1503 03.82 (P04C01)

## ANNEX TO THE EUROPEAN SEARCH REPORT
## ON EUROPEAN PATENT APPLICATION NO.

EP 15 15 8508

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2015

| Patent document cited in search report | | Publication date | Patent family member(s) | | Publication date |
|---|---|---|---|---|---|
| AT 412668 | B | 25-05-2005 | AT | 412668 B | 25-05-2005 |
| | | | CH | 697565 B1 | 15-12-2008 |
| WO 2014173530 | A1 | 30-10-2014 | EP | 2796499 A1 | 29-10-2014 |
| | | | WO | 2014173530 A1 | 30-10-2014 |
| WO 0022040 | A1 | 20-04-2000 | AR | 020808 A1 | 29-05-2002 |
| | | | AT | 273345 T | 15-08-2004 |
| | | | AU | 748515 B2 | 06-06-2002 |
| | | | AU | 1421200 A | 01-05-2000 |
| | | | BR | 9914534 A | 03-07-2001 |
| | | | CN | 1326484 A | 12-12-2001 |
| | | | DE | 69919393 D1 | 16-09-2004 |
| | | | DE | 69919393 T2 | 23-12-2004 |
| | | | DK | 1137707 T3 | 29-11-2004 |
| | | | EP | 1137707 A1 | 04-10-2001 |
| | | | ES | 2222050 T3 | 16-01-2005 |
| | | | PL | 347899 A1 | 22-04-2002 |
| | | | PT | 1137707 E | 30-11-2004 |
| | | | US | 2002045711 A1 | 18-04-2002 |
| | | | WO | 0022040 A1 | 20-04-2000 |
| US 3451434 | A | 24-06-1969 | NONE | | |
| WO 0001765 | A1 | 13-01-2000 | AT | 275605 T | 15-09-2004 |
| | | | AU | 740908 B2 | 15-11-2001 |
| | | | AU | 5074999 A | 24-01-2000 |
| | | | BR | 9911868 A | 27-03-2001 |
| | | | CN | 1307612 A | 08-08-2001 |
| | | | CZ | 20010061 A3 | 17-10-2001 |
| | | | DE | 69920021 D1 | 14-10-2004 |
| | | | DE | 69920021 T2 | 20-01-2005 |
| | | | DK | 1095102 T3 | 29-11-2004 |
| | | | EP | 1095102 A1 | 02-05-2001 |
| | | | ES | 2224684 T3 | 01-03-2005 |
| | | | HU | 0102621 A2 | 28-11-2001 |
| | | | IL | 140116 A | 31-08-2005 |
| | | | JP | 4577988 B2 | 10-11-2010 |
| | | | JP | 2002519496 A | 02-07-2002 |
| | | | PT | 1095102 E | 30-11-2004 |
| | | | RU | 2223987 C2 | 20-02-2004 |
| | | | TR | 200100152 T2 | 23-07-2001 |
| | | | US | 6878784 B1 | 12-04-2005 |
| | | | WO | 0001765 A1 | 13-01-2000 |
| | | | ZA | 200007701 A | 21-06-2001 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 15 15 8508

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2015

| Patent document cited in search report | | Publication date | Patent family member(s) | | Publication date |
|---|---|---|---|---|---|
| EP 0228000 | A1 | 08-07-1987 | DE 8536338 U1 | | 27-03-1986 |
| | | | EP 0228000 A1 | | 08-07-1987 |
| | | | US 4778977 A | | 18-10-1988 |
| GB 308237 | A | 20-03-1929 | NONE | | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3404203 A
- CN 101337425
- WO 0001765 A
- WO 0022040 A
- WO 2014173530 A

### Non-patent literature cited in the description

- Biaxially oriented polypropylene pipes: implications for impact and hydrostatic pressure resistance. *Plastics, Rubber and Composites,* 01 December 2006, vol. 35 (10), 447-454
- **B. HAGSTRÖM.** Conference on Polymer Processing. The Polymer Processing Society, 19 August 1997, vol. 4, 13
- **HANS ZWEIFEL.** Plastics Additives handbook. 2011
- Encyclopedia of Polymer Science and Engineering. vol. 14, 492-509
- **JC. RANDALL'S.** *JMS - Rev. Macromol. Chem. Phys.,* 1989, vol. C29 (2-3), 201-317
- **MIN K ; WHITE JL ; FELLERS JF.** *J. Appl. Polym. Sci.,* 1984, vol. 29, 2117
- ISO 16152. 01 July 2005